# EUROPÄISCHE PATENTSCHRIFT

(11) **EP 0 744 567 B1**
(45) Veröffentlichungstag und Bekanntmachung des Hinweises auf die Patenterteilung: **17.03.1999**
(21) Anmeldenummer: 96100535.2
(22) Anmeldetag: 16.01.1996
(51) Int. Cl.: F16J 15/32

(54) **Radialwellendichtring**
Radial shaft seal
Joint à lèvre radiale

(30) Priorität: 20.05.1995 DE 19518577
(43) Veröffentlichungstag der Anmeldung: 27.11.1996
(73) Patentinhaber: Firma Carl Freudenberg, 69469 Weinheim (DE)
(72) Erfinder: Drucktenhengst, Rolf, D-68623 Lampertheim (DE); Vogt, Rolf, D-68723 Oftersheim (DE)

(56) Entgegenhaltungen:
- WO-A-93/14965
- DE-A- 2 842 694
- DE-B- 2 736 207

## Beschreibung

Die Erfindung betrifft einen Radialwellendichtring, umfassend einen Dichtring und eine Staublippe aus polymerem Werkstoff, die die abzudichtende Welle in einem axialen Abstand mit kontinuierlich umlaufenden Dichtkanten berühren.

Ein solcher Radialwellendichtring ist aus der DE-AS 12 84 203 bekannt. Das damit erzielte Abdichtungsergebnis beruht darauf, daß bei umlaufender Welle kontinuierlich ein Strömungsmittel unter der Dichtkante hindurch in Richtung des abzudichtenden Raums gefördert wird. Um dabei zu verhindern, daß sich im Zwischenraum zwischen der Dichtlippe und der Staublippe ein Unterdruck aufbaut mit der Folge einer unzulässig großen Anpressung der Dicht- und der Staublippe an die Oberfläche der umlaufenden Welle ist eine Entlüftungsbohrung vorgesehen, die den Zwischenraum zwischen der Dicht- und der Staublippe mit dem abzudichtenden Raum verbindet. Dabei muß allerdings in Kauf genommen werden, daß abzudichtendes Medium, beispielsweise Schmieröl, in den Zwischenraum zwischen der Dicht- und der Staublippe hinein gelangt und bei Wellenstillstand die Staublippe in Richtung der Außenseite zu passieren vermag. Die Folge ist eine verstärkte Staubablagerung im Bereich der Außenseite der Staublippe, was nicht nur hinsichtlich des äußeren Erscheinungsbilds wenig befriedigend ist sondern darüber hinaus zu einem verstärkten Verschleiß der Staublippe bei erneut einsetzender Drehbewegung der Welle führt.

Der Erfindung liegt die Aufgabe zugrunde, ein solchen Radialwellendichtring derart weiterzuentwickeln, daß sich bei vermindertem Verschleiß ein verbessertes Abdichtungsergebnis bei umlaufender Welle und im Wellenstillstand ergibt.

Diese Aufgabe wird erfindungsgemäß bei einem Wellendichtring der eingangs genannten Art dadurch gelöst, daß die Staublippe zumindest zwei durch einen ersten Zwischenraum voneinander getrennte Dichtkanten aufweist und daß die Dichtkanten an zueinander in Umfangsrichtung versetzt angeordneten Umfangsstellen jeweils von zumindest einer in Richtung der Welle offenen Nut durchbrochen sind. Der Zwischenraum zwischen der Dicht- und der Staublippe wird hierdurch in ausgezeichneter Weise belüftet, ohne daß es zu einer verstärkten Staub- oder Öleinlagerung kommt. Sowohl bei Wellenstillstand als auch bei umlaufender Welle wird dadurch ein ausgezeichnetes Entwicklungsergebnis erzielt ohne daß im Bereich der Außenseite der Staublippe eine Öl- oder sonstige Verschmutzung erkennbar ist. Auch hinsichtlich des Verschleißverhaltens und der auf die umlaufende Welle ausgeübten Bremswirkung ergibt sich dadurch eine deutliche Verbesserung.

Die Herstellung des erfindungsgemäßen Radialwellendichtrings kann unter Verwendung an sich bekannten Spritz- oder Preßverfahren erfolgen, bei denen ein Dichtungswerkstoff unmittelbar an einen Versteifungsring aus einem Hartwerkstoff angeformt und im Zuge seiner nachfolgenden Verfestigung mit dem Versteifungsring verbunden wird. Die die Dichtkanten durchbrechenden Nuten können damit zugleich erzeugt werden, ohne daß es hierzu eines besonderen Arbeitsschrittes oder eines besonders aufwendigen Werkzeuges bedarf. Der erfindungsgemäße Radialwellendichtring ist dadurch vergleichsweise billiger erzeugbar als die bekannte Ausführung.

Die der Dichtkante während der bestimmungsgemäßen Verwendung durch die Nuten zugeführte Luftströmung wird beim Passieren der Nuten und ersten Zwischenräumen mehrfach umgelenkt und zweckmäßig durch Querschnitte geleitet, die unterschiedlich groß sind. In dichtungstechnischer Hinsicht resultiert daraus ein Labyrintheffekt, was den Durchtritt von Staubpartikeln weitestgehend ausschließt. Die grundsätzliche Wirkung der Staublippe, die darin besteht, die Dichtlippe vor einer Beaufschlagung mit Staub zu schützen, bleibt somit im Wesentlichen unverändert erhalten. Als besonders zweckmäßig hat es sich in dieser Hinsicht erwiesen, wenn die Staublippe mehrere durch erste Zwischenräume voneinander getrennte Dichtkanten aufweist.

Der Staublippe kann in Richtung der Dichtlippe eine Hilfsdichtlippe vorgeschaltet sein, die die Welle mit einem kontinuierlich umlaufenden Dichtband berührt, wobei die Hilfsdichtlippe von der Dichtlippe durch einen zweiten Zwischenraum getrennt ist. Die die eigentliche Flüssigkeitsabdichtung bewirkende Dichtlippe wird dadurch noch besser vor einer Beaufschlagung mit Staubpartikeln geschützt und das Abdichtungsergebnis noch weiter verbessert.

Die Dichtlippe und die Hilfsdichtlippe können mit zweiten Dichtkanten versehen sein, die jeweils durch zwei einander durchschneidende Kegelflächen gebildet sind. Die Kegelflächen sind einander und der Oberfläche der abgedichteten Welle so zugeordnet, daß sich eine in Richtung des abzudichtenden Raums gewandte Förderwirkung ergibt. Dazu ist es vorgesehen, daß die dem abgedichteten Raum zugewandte Kegelfläche mit der Dichtungsachse einen steileren Winkel einschließt als die der der Außenluft zugewandte Kegelfläche. Um diese Förderwirkung noch weiter zu verbessern, was in Hinblick auf das Verhindern des Austretens von Flüssigkeitsbestandteilen von Vorteil ist, hat es sich als sinnvoll erwiesen, wenn auf der der Hilfsdichtlippe zugewandten Kegelfläche der Dichtlippe hydrodynamisch wirkende Rückförderelemente mit einer Förderwirkung in Richtung des abgedichteten Raums vorgesehen sind. Derartige Rückförderelemente können beispielsweise durch sinusförmige Drallrippen gebildet sein, die sich auf der Kegelfläche in Umfangsrichtung erstrecken.

Um auch in kritischen Betriebssituationen eine ausreichende Schmierwirkung der Dichtlippe zu gewährleisten hat es sich als vorteilhaft bewährt, wenn der zweite Zwischenraum mit Fett gefüllt ist.

Die ersten Dichtkanten der Staublippe können ebenfalls durch zwei einander durchschneidende Kegelflächen gebildet sein. Diese müssen einander und der Welle derart zugeordnet sein, daß sich eine Förderwirkung in Richtung der Außenseite ergibt. Das Profil der der Außenluft zugewandten Kegelfläche soll zu diesem Zwecke mit der Dichtungsachse einen Winkel einschließne, der größer ist als die dem abzudichtetnden Raum zugewandte Kegelfläche. Dem Eindringen von Staubpartikeln aus der Umgebung in den Zwischenraum zwischen der Staub- und der Dichtlippe wird dadurch vorgebeugt.

Die Winkelhalbierenden der die ersten Dichtkanten begrenzenden Kegelflächen sollen, bezogen auf die Winkelhalbierenden der die zweiten Dichtkanten und der gegebenenfalls die Dichtkante der Hilfsdichtlippe begrenzenden Kegelflächen eine entgegengesetzte Neigungsrichtung haben, bezogen auf die Längsrichtung der Welle. Der im Bereich der einzelnen Dichtkanten angestrebten Richtung, in der eine Dichtwirkung angestrebt wird, wird hierdurch Rechnung getragen.

Die Erfindung wird nachfolgend anhand der in der Anlage beigefügten Zeichnungen weiter verdeutlicht.

Es zeigen:

Fig. 1 eine beispielhafte Ausführung des erfindungsgemäßen Radialwellendichtrings in halbgeschnittener Darstellung.

Fig. 2 einen Ausschnitt aus dem erfindungsgemäßen Radialwellendichtring, der sich auf die Bereiche der Dicht- und der Staublippe bezieht.

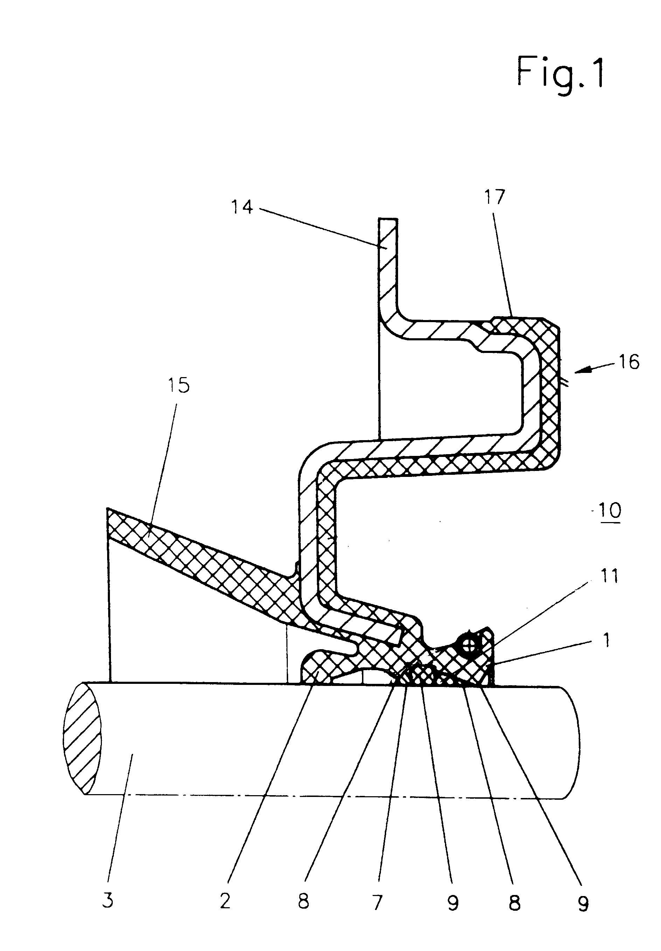

Der in Fig. 1 gezeigte Radialwellendichtring besteht aus einem Versteifungsring 14 aus tiefgezogenem Stahlblech, an den ein ringförmig ausgebildetes Dichtelement 16 aus gummielastischem Werkstoff unmittelbar anvulkanisiert ist. Während der bestimmungsgemäßen Verwendung ist der Radialwellendichtring in den ringförmig ausgebildeten Spalt zwischen einer Bohrung und einer diese konzentrisch durchdringenden Welle 3 eingepreßt. Dabei wird der Radialwellendichtring durch eine statische Abdichtungszone 17 gegenüber der Bohrung abgedichtet und durch unmittelbaren Berührungskontakt zwischen dem Versteifungsring 14 und der zylindrischen Innenfläche der Bohrung in radialer Richtung geführt. Im Bereich der Innenseite ist das Dichtelement 16 mit mehreren, in axialer Richtung aufeinander folgenden Teildichtungen 1, 7, 2, 15 versehen, die während der bestimmungsgemäßen Verwendung mit relativ verdrehbaren und teilweise nicht gezeigten Maschinenelementen in dichtenden Eingriff gelangen. Die Vorschaltdichtung 15 ist den übrigen Teildichtungen 1, 7, 2 in Richtung der Außenluft vorgelagert. Sie hat den Zweck, eine unmittelbare Beaufschlagung der Staublippe 2 mit groben Schmutzpartikeln zu verhindern. Sämtliche Teildichtungen 1, 7, 2, 15 sind ringförmig gestaltet.

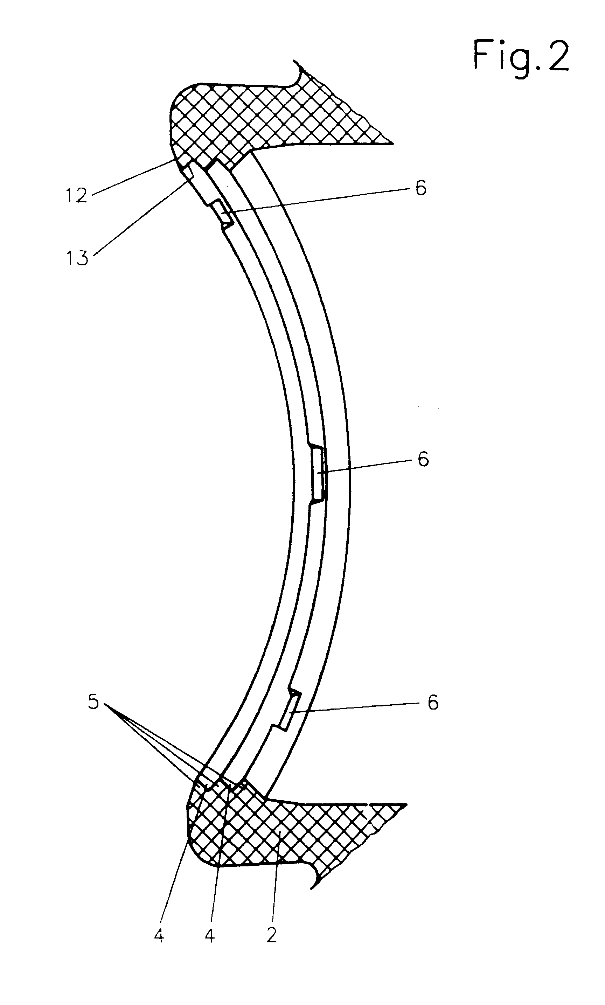

Die Staublippe 2 ist mit drei durch jeweils einem ersten Zwischenraum 4 voneinander getrennten (Fig. 2) Dichtkanten 5 versehen, wobei die Dichtkanten 5 zueinander in Umfangsrichtung versetzt angeordneten Umfangsstellen jeweils von zumindest einer in Richtung der Welle 3 offenen Nut 6 (Fig. 2) durchbrochen sind. Die einzelnen Nuten 6 haben einen Öffnungsquerschnitt, der geringer ist als derjenige der ersten Zwischenräume 4 die während der bestimmungsgemäßen Verwendung die Nuten 6 und die sich daran in Richtung der Dichtlippe 1 anschließenden, ersten Zwischenräume 4 passierende Luft weist dadurch in den verschiedenen Teilbereichen unterschiedliche Strömungsgeschwindigkeiten auf, wodurch es weitgehend ausgeschlossen ist, daß aus dem Bereich der Außenseite auf die Staublippe auftreffende Staubpartikel die Staublippen in ihrer Gesamtheit zu passieren vermögen. Dennoch ist eine ausgezeichnete Belüftung des die Staublippe 2 von der Dichtlippe 1 trennenden zweiten Zwischenraumes 11 gewährleistet. Im zweiten Zwischenraum 11 kann sich bei drehender Welle 3 dadurch kein Vakuum aufbauen und zu einer Erhöhung der Anpressung der Dichtlippe 1 sowie der Staublippe 2 an die Oberfläche der abzudichtenden Welle 3 führen. Der zweite Zwischenraum 11 ist mit Schmierfett gefüllt, um ein verbessertes Nutlaufverhalten der Dichtlippe 1 zu erreichen. Zwischen der Dichtlippe 1 und der Staublippe 2 ist eine Hilfsdichtlippe 7 angeordnet. Diese ist ebenso wie die Dichtlippe 1 mit zweiten Dichtkanten versehen, wobei die zweiten Dichtkanten jeweils durch zwei einander durchschneidende Kegelflächen 8, 9 gebildet sind. Die der Hilfsdichtlippe 7 zugewandte Kegelfläche 8 der Dichtlippe 1 ist mit hydrodynamischen Rückförderelementen versehen, die bei drehender Welle eine Förderwirkung in Richtung des abgedichteten Raums 10 aufweisen. Dies Dichtkanten der Dichtlippe 1 passierendes, abzudichtendes Medium, beispielsweise Schmieröl wird dadurch bei Drehender Welle 3 in den abzudichtenden Raum zurückgefördert. Die Winkelhalbierenden der die ersten Dichtkanten begrenzenden Kegelflächen 8, 9 haben, bezogen auf die Winkelhalbierenden der die zweiten Dichtkanten begrenzenden Kegelflächen 12, 13 eine entgegengesetzte Neigungsrichtung, bezogen auf die Längsrichtung der Welle 3 (Fig. 2). Hierdurch wird erreicht, daß sich im Bereich der Staublippe bei drehender Welle 3 trotz der Nuten 6 eine geringe, in Richtung der Außenseite weisende Förderwirkung ergibt und im Bereich der Hilfsdichtlippe 7 und der Dichtlippe in eine Richtung des abgedichteten Raumes weisende Förderwirkung.

Der gezeigte Radialwellendichtring ist insbesondere für die Abdichtung von Wellen geeignet, die während ihrer bestimmungsgemäßen Verwendung einer größeren Staubbelastung ausgesetzt sind.

## Patentansprüche

1. Radialwellendichtring, umfassend einen Dichtring (1) und eine Staublippe (2) aus polymerem Werkstoff, die die abzudichtende Welle (3) in einem axialen Abstand mit konzentrisch umlaufenden Dichtkanten berühren, dadurch gekennzeichnet, daß die Staublippe (2) zumindest zwei durch einen ersten Zwischenraum (4) voneinander getrennte, erste Dichtkanten (5) aufweist und daß die erste Dichtkanten (5) an zueinander in Umfangsrichtung versetzt angeordenten Umfangsstellen jeweils von zumindest einer in Richtung der Welle (3) offenen Nut (6) durchbrochen sind.

2. Radialwellendichtring nach Anspruch 1, dadurch gekennzeichnet, daß die Staublippe (2) drei Dichtkanten (5) aufweist.

3. Radialwellendichtring nach Anspruch 1 bis 2, dadurch gekennzeichnet, daß der Staublippe (2) in Richtung der Dichtlippe (1) eine Hilfsdichtlippe (7) vorgeschaltet ist, daß die Hilfsdichtlippe (7) die Welle mit einem kontinuierlich umlaufenden Dichtband berührt und daß die Hilfsdichtlippe (7) von der Dichtlippe (1) durch einen zweiten Zwischenraum (11) getrennt ist.

4. Radialwellendichtring nach Anspruch 3, dadurch gekennzeichnet, daß die Dichtlippe (1) und die Hilfsdichtlippe (7) mit zweiten Dichtkanten versehen sind und daß die zweiten Dichtkanten jeweils durch zwei einander durchschneidende Kegelflächen (8, 9) gebildet sind.

5. Radialwellendichtring nach Anspruch 4, dadurch gekennzeichnet, daß auf der der Hilfsdichtlippe (7) zugewandten Kegelfläche (8) der Dichtlippe (1) hydrodynamisch wirkende Rückförderelemente mit einer Förderwirkung in Richtung des abgedichteten Raums (10) vorgesehen sind.

6. Radialwellendichtring nach Anspruch 3 bis 5, dadurch gekennzeichnet, daß der zweite Zwischenraum (11) mit Fett gefüllt ist.

7. Radialwellendichtring nach Anspruch 1 bis 6, dadurch gekennzeichnet, daß die ersten Dichtkanten (5) durch zwei einander durchschneidende Kegelflächen (12, 13) gebildet sind.

8. Radialwellendichtring nach Anspruch 1 bis 7, dadurch gekennzeichnet, daß die Winkelhalbierenden der die ersten Dichtkanten (5) begrenzenden Kegelflächen (8, 9), bezogen auf die Winkelhalbierenden der die zweiten Dichtkanten begrenzenden Kegelflächen (8, 9), eine entgegengesetzte Neigungsrichtung haben, bezogen auf die Längsrichtung der Welle (3).

## Claims

1. A radial shaft seal, comprising a sealing ring (1) and a dust-sealing lip (2) made of polymer material, which, by way of concentrically circumferential sealing edges at an axial spacing, touch the shaft (3) to be sealed, characterized in that the dust-sealing lip (2) has at least two first sealing edges (5), which are separated from one another by a first interspace (4), and in that the first sealing edges (5), at circumferential points which are arranged so as to be mutually offset in the circumferential direction, are each penetrated by at least one groove (6) that is open in the direction of the shaft (3).

2. A radial shaft seal according to claim 1, characterized in that the dust-sealing lip (2) has three sealing edges (5).

3. A radial shaft seal according to either of claims 1 and 2, characterized in that an auxiliary sealing lip (7) is placed upstream of the dust-sealing lip (2) in the direction of the sealing lip (1), in that the auxiliary sealing lip (7) touches the shaft by way of a continuously circumferential sealing band, and in that the auxiliary sealing lip (7) is separated from the sealing lip (1) by a second interspace (11).

4. A radial shaft seal according to claim 3, characterized in that the sealing lip (1) and the auxiliary sealing lip (7) are provided with second sealing edges, and in that the second sealing edges are each formed by two mutually intersecting conical faces (8, 9).

5. A radial shaft seal according to claim 4, characterized in that that conical face (8) of the sealing lip (1) which faces the auxiliary sealing lip (7) is provided with hydrodynamically acting return elements having a conveying action in the direction of the sealed-off space (10).

6. A radial shaft seal according to any of claims 3 to 5, characterized in that the second interspace (11) is filled with grease.

7. A radial shaft seal according to any of claims 1 to 6, characterized in that the first sealing edges (5) are formed by two mutually intersecting conical faces (12, 13).

8. A radial shaft seal according to any of claims 1 to 7, characterized in that, in relation to the longitudinal direction of the shaft (3), the bisectors of the conical faces (8, 9) bounding the first sealing edges (5) have an opposite inclination in relation to the bisectors of the conical faces (8, 9) bounding the second sealing edges.

## Revendications

1. Joint à lèvre radiale, comprenant une bague d'étanchéité (1) et une lèvre (2) étanche à la poussière en matière polymère qui sont en contact avec l'arbre (3) à rendre étanche, à une distance axiale, au moyen d'arêtes d'étanchéité concentriques, caractérisé en ce que la lèvre (2) étanche à la poussière est pourvue d'au moins deux premières arêtes d'étanchéité (5) séparées l'une de l'autre par un premier espace intermédiaire (4) et en ce que les premières arêtes d'étanchéité (5) sont percées à chaque fois par au moins une rainure (6) ouverte en direction de l'arbre (3) en des points de la circonférence décalés l'un par rapport à l'autre dans la direction circonférentielle.

2. Joint à lèvre radiale selon la revendication 1, caractérisé en ce que la lèvre (2) étanche à la poussière est pourvue de trois arêtes d'étanchéité (5).

3. Joint à lèvre radiale selon l'une des revendications 1 à 2, caractérisé en ce qu'une lèvre d'étanchéité auxiliaire (7) est placée avant la lèvre (2) étanche à la poussière, en direction de la lèvre d'étanchéité (1), en ce que la lèvre d'étanchéité auxiliaire (7) est en contact avec l'arbre, sur toute la circonférence, au moyen d'une bande d'étanchéité continue, et en ce que la lèvre d'étanchéité auxiliaire (7) est séparée de la lèvre d'étanchéité (1) par un second espace intermédiaire (11).

4. Joint à lèvre radiale selon la revendication 3, caractérisé en ce que la lèvre d'étanchéité (1) et la lèvre d'étanchéité auxiliaire (7) sont pourvues de secondes arêtes d'étanchéité et en ce que les secondes arêtes d'étanchéité sont formées, à chaque fois, par deux surfaces coniques (8, 9) qui se coupent.

5. Joint à lèvre radiale selon la revendication 4, caractérisé en ce que l'on prévoit, sur la surface conique (8) de la lèvre d'étanchéité (1) tournée vers la lèvre d'étanchéité auxiliaire (7), des éléments de refoulement à action hydrodynamique dont l'action de refoulement s'exerce en direction de l'espace rendu étanche (10).

6. Joint à lèvre radiale selon l'une des revendications 3 à 5, caractérisé en ce que le second espace intermédiaire (11) est rempli de graisse.

7. Joint à lèvre radiale selon l'une des revendications 1 à 6, caractérisé en ce que les premières arêtes d'étanchéité (5) sont formées par deux surfaces coniques (12,13) qui se coupent.

8. Joint à lèvre radiale selon l'une des revendications 1 à 7, caractérisé en ce que les bissectrices des surfaces coniques (8, 9) limitant les premières arêtes d'étanchéité (5) ont une direction d'inclinaison par rapport à la direction longitudinale de l'arbre (3) qui est opposée à la direction d'inclinaison des bissectrices des surfaces coniques (8, 9) limitant les secondes arêtes d'étanchéité.
